# EUROPÄISCHE PATENTSCHRIFT

(11) **EP 3 387 290 B1**
(45) Veröffentlichungstag und Bekanntmachung des Hinweises auf die Patenterteilung: **28.10.2020**
(21) Anmeldenummer: 16820160.6
(22) Anmeldetag: 01.12.2016
(51) Int. Cl.: F16H 9/04, F16D 13/76, F16D 41/20, F16D 3/72

(54) **RIEMENSCHEIBENENTKOPPLER**
BELT PULLEY DECOUPLER
DISPOSITIF D'ISOLATION VIBRATOIRE À POULIE À COURROIE

(30) Priorität: 08.12.2015 DE 102015224608
(43) Veröffentlichungstag der Anmeldung: 17.10.2018
(73) Patentinhaber: Schaeffler Technologies AG & Co. KG, 91074 Herzogenaurach (DE)
(72) Erfinder: KASTNER, Michael, 91052 Erlangen (DE); ARNETH, Roland, 91330 Eggolsheim (DE); HAUCK, Christian, 90518 Altdorf (DE); PECHER, Sebastian, 90762 Fürth (DE); GÖTZ, Andreas, 91489 Wilhelmsdorf (DE)
(86) Internationale Anmeldenummer: PCT/DE2016/200572
(87) Internationale Veröffentlichungsnummer: WO 2017/097299

(56) Entgegenhaltungen:
- EP-A2- 2 894 364
- WO-A1-2012/061930
- US-A1- 2004 112 700
- US-A1- 2015 167 816

## Beschreibung

Die Erfindung betrifft einen Riemenscheibenentkoppler zur Antriebsmomentübertragung vom Riemen eines Nebenaggregate-Riementriebs auf die Welle eines der Nebenaggregate, mit:
- einer Riemenscheibe,
- einer auf der Welle zu befestigenden Nabe
- und einer im Antriebsmomentfluss zwischen der Riemenscheibe und der Nabe angeordneten Reihenschaltung aus einer Entkopplerfeder und einem Schlingband, das sich in Richtung der Drehachse des Riemenscheibenentkopplers erstreckt und radial zwischen der Riemenscheibe und der Entkopplerfeder angeordnet ist und dessen beide

Enden sich unter Übertragung des Antriebsmoments radial aufweiten,
wobei sich das im Antriebsmomentfluss seitens der Riemenscheibe verlaufende erste Schlingbandende gegen den Innenmantel einer ersten Hülse verspannt, die in der Riemenscheibe drehbefestigt ist.

Drehschwingungen und -ungleichförmigkeiten, die von der Kurbelwelle einer Brennkraftmaschine in deren Nebenaggregate-Riementrieb eingeleitet werden, können bekanntlich durch Riemenscheibenentkoppler kompensiert werden, die im Englischen üblicherweise als Decoupler bezeichnet und typischerweise als Generator-Riemenscheibe ausgebildet sind. Das Schlingband dient als Einwegkupplung, die im geschlossenen Zustand das Antriebsmoment von der Riemenscheibe auf die Nabe überträgt, wobei die Elastizität der mit dem Schlingband in Reihe geschalteten Entkopplerfeder die aus dem Riementrieb stammenden Drehungleichförmigkeiten glättet. Bei verzögert rotierender Riemenscheibe öffnet das Schlingband, wobei - dann umgekehrt - kein nennenswertes Drehmoment von der Nabe auf die Riemenscheibe übertragen werden kann, so dass die mit hoher Massenträgheit belastete Generatorwelle die Riemenscheibe überholen kann.

Ein Riemenscheibenentkoppler ohne Schlingband ist aus der WO 2012/061930 A1 bekannt.

Die US 2004/0112700 A1 offenbart einen Riemenscheibenentkoppler ohne Entkopplerfeder.

Ein Riemenscheibenentkoppler mit radial innen angeordnetem Schlingband und radial außen angeordneter Entkopplerfeder in Form einer Schraubendrehfeder ist aus der DE 10 2009 052 611 A1 und der EP 2 894 364 A2 bekannt.

Ein gattungsgemäßer Riemenscheibenentkoppler mit demgegenüber radial vertauschter Anordnung von Schlingband und Schraubendrehfeder geht beispielsweise aus der US 8,047,920 B2 und der US 2015/0167816 A1 hervor. Ausgehend hiervon liegt der vorliegenden Erfindung die Aufgabe zugrunde, einen derartigen Riemenscheibenentkoppler in einer alternativen konstruktiven Ausgestaltung anzugeben.

Die Lösung hierfür ergibt sich aus den Merkmalen des Anspruchs 1. Demnach soll sich das im Antriebsmomentfluss seitens der Entkopplerfeder verlaufende zweite Schlingbandende gegen den Innenmantel einer zweiten Hülse verspannen, die in der ersten Hülse drehbar gelagert ist, wobei die erste Hülse und die zweite Hülse einteilig umgeformte und zwecks Verschleißfestigkeit gehärtete und/oder beschichtete Blechteile sind.

Anders als im eingangs zitierten Stand der Technik umfasst der Riemenscheibenentkoppler zwei drehbar ineinander gelagerte Hülsen, in die sich das unter Belastung radial aufweitende Schlingband mit beiden Enden hinein schlingt und das Antriebsmoment überträgt. Folglich können die mit dem Schlingband an- und abtriebseitig gekoppelten Bauteile einfache und kostengünstig herstellbare Kontaktgeometrien für die Schlingbandenden haben. Insbesondere verhindert die drehbare Lagerung der zweiten Hülse in der ersten Hülse den unmittelbaren Kontakt des Schlingbands mit dem Innenmantel der Riemenscheibe, so dass auf eine die Verschleißfestigkeit erhöhende Wärmebehandlung und/oder Oberflächenbeschichtung der Riemenscheibe verzichtet werden kann.

In der bevorzugten Ausgestaltung eines schenkellosen und folglich vollständig zylindrischen Schlingbands sind die Innenmantelflächen der beiden Hülsen ebenfalls vollständig zylindrisch, so dass das Antriebsmoment ausschließlich durch Reibkontaktkräfte zwischen dem Außenmantel des Schlingbands und dem Innenmantel der beiden Hülsen übertragen wird.

Beide Hülsen sind kostengünstig herstellbare Blechumformteile, wobei die erste Hülse bevorzugt über einen Pressverband in der Riemenscheibe drehbefestigt ist. Die erste Hülse kann mit einer ersten Durchmesserstufe als Axialanschlag für die zweite Hülse und mit einer zweiten Durchmesserstufe als Axialanschlag für das Schlingband versehen sein.

Diese zweifach im Durchmesser gestufte Hülsengeometrie ermöglicht es, dass der Innendurchmesser der Riemenscheibe im wesentlichen ohne oder allenfalls mit nur kleinen Durchmesserstufen kostengünstig gefertigt (gedreht) werden kann.

Für die Montage des Schlingbands in die erste Hülse kann es vorteilhaft sein, dass die erste Hülse mit umfangsverteilten Öffnungen für ein Montagewerkzeug versehen ist. Dieses Werkzeug greift in die Öffnungen ein und verkleinert den Außendurchmesser des Schlingbands, um das Schlingband möglichst widerstandsarm axial über die erste Durchmesserstufe bis hin zur Anlage an der zweiten Durchmesserstufe in die erste Hülse einführen zu können. Die Öffnungen sind in dem Drehlagerabschnitt für die zweite Hülse und zweckmäßigerweise nahe der ersten Durchmesserstufe angeordnet.

Weitere Merkmale der Erfindung ergeben sich aus der nachfolgenden Beschreibung und aus den Zeichnungen, in denen ein Ausführungsbeispiel und dazu alternative konstruktive Details eines erfindungsgemäßen Riemenscheibenentkopplers für den im Nebenaggregate-Riementrieb einer Brennkraftmaschine angeordneten Generator dargestellt sind. Es zeigen:
- Figur 1: den Riemenscheibenentkoppler in perspektivischer Gesamtdarstellung;
- Figur 2: den Riemenscheibenentkoppler in perspektivischem Längsschnitt;
- Figur 3: den Riemenscheibenentkoppler in perspektivisch explodierter Darstellung;
- Figur 4: die erste Hülse des Riemenscheibenentkopplers in perspektivischer Einzelteildarstellung;
- Figur 5: die zweite Hülse des Riemenscheibenentkopplers in perspektivischer außenseitiger Einzelteildarstellung;
- Figur 6: die zweite Hülse des Riemenscheibenentkopplers in perspektivischer innenseitiger Einzelteildarstellung;
- Figur 7: die Nabe des Riemenscheibenentkopplers in perspektivischer Einzelteildarstellung;
- Figur 8: die Entkopplerfeder des Riemenscheibenentkopplers in perspektivischer Einzelteildarstellung;
- Figur 9: einen Riemenscheibenentkoppler mit nicht erfindungsgemäßer Drehlagerung der Hülsen in perspektivischem Längsschnitt;
- Figur 10: die Nabe des Riemenscheibenentkopplers gemäß Figur 9 in perspektivischer Einzelteildarstellung;
- Figur 11: die Entkopplerfeder des Riemenscheibenentkopplers gemäß Figur 9 in perspektivischer Einzelteildarstellung;
- Figur 12: die zweite Hülse des Riemenscheibenentkopplers gemäß Figur 9 in perspektivischer innenseitiger Einzelteildarstellung.

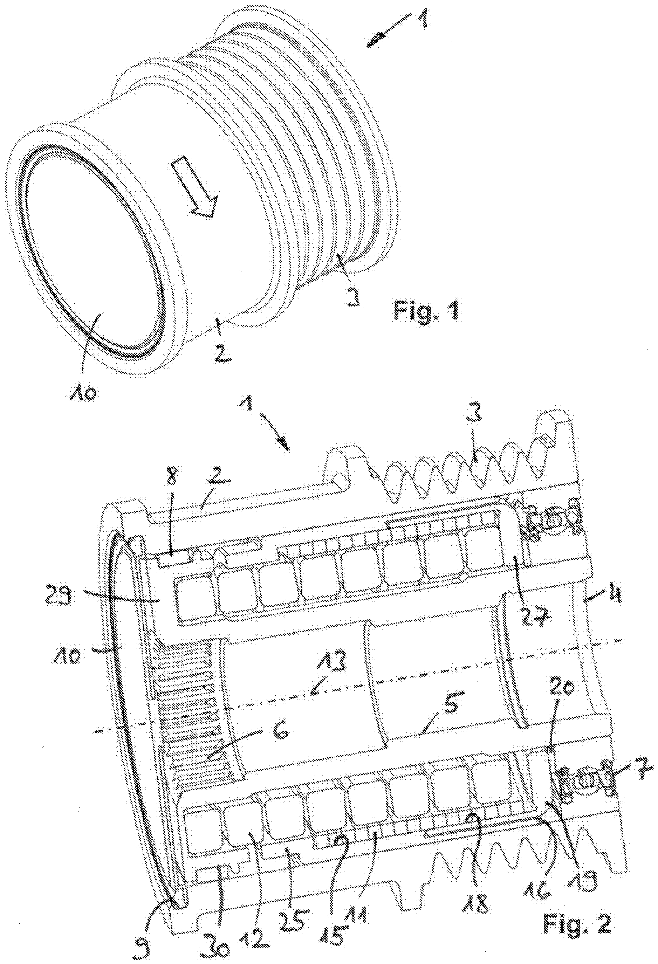

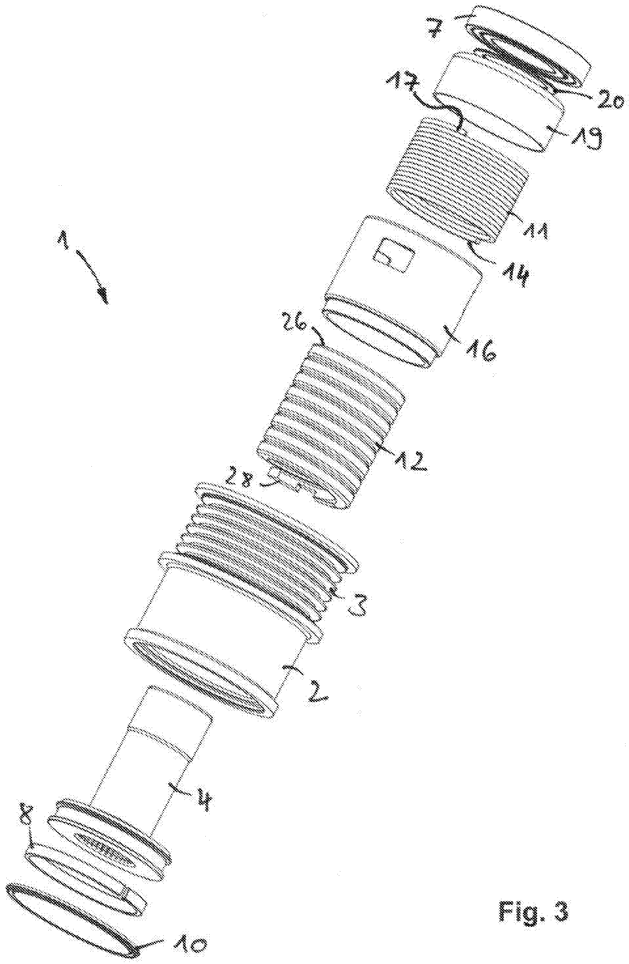

Die Figuren 1 bis 3 zeigen den Riemenscheibenentkoppler 1, nachfolgend kurz als Entkoppler 1 bezeichnet, in verschiedenen perspektivischen Darstellungen, nämlich als Gesamtheit in Figur 1, im Längsschnitt in Figur 2 und als Explosion in Figur 3. Eine hohlzylindrische Riemenscheibe 2, deren vom Riemen umschlungener Außenmantel 3 der Poly-V-Form des Riemens entsprechend profiliert ist, wird vom Riemen in der in Figur 1 eingezeichneten Drehrichtung angetrieben. Die Riemenscheibe 2 ist drehbar auf einer Nabe 4 gelagert, die fest mit der Generatorwelle verschraubt wird. Hierzu hat die Nabe 4 im Mittelabschnitt 5 ein nicht dargestelltes Innengewinde und am generatorfernen, vorderen Endabschnitt einen Innenvielzahn 6 als Eingriffskontur für das Schraubwerkzeug. Die Lagerung der Riemenscheibe 2 auf der Nabe 4 erfolgt am generatorseitigen Ende radial und axial mittels eines Wälzlagers 7 und am generatorfernen Ende radial mittels eines Gleitlagers 8. Das Wälzlager 7 ist ein einreihiges und beidseitig abgedichtetes Kugellager 7, und das Gleitlager 8 ist ein Radiallagerring 8 aus Polyamid, der mit dem Innendurchmesser der Riemenscheibe 2 in unmittelbarem Gleitkontakt steht.

Der Innendurchmesser der Riemenscheibe 2 ist im gesamten Axialbereich zwischen dem Radiallagerring 8 und dem Außenring des Kugellagers 7 einheitlich und daher einer besonders einfachen und kostengünstigen Drehbearbeitung zugänglich. Die Riemenscheibe 4 hat lediglich am generatorfernen Ende eine im Durchmesser gestufte Erweiterung 9, in die nach dem Verschrauben des Entkopplers 1 auf die Generatorwelle eine Schutzkappe 10 eingeschnappt wird.

Die für die Funktion des Entkopplers 1 wesentlichen Komponenten sind eine als Schlingband 11 ausgebildete Einwegkupplung 11 und eine - bezüglich des Antriebsmomentflusses von der Riemenscheibe 2 auf die Nabe 4 - mit dem Schlingband 11 in Reihe geschaltete Entkopplerfeder 12, die als Schraubendrehfeder 12 ausgebildet ist. Das Schlingband 11 und die Schraubendrehfeder 12 erstrecken sich koaxial zueinander in Richtung der Drehachse 13 des Entkopplers 1, wobei das Schlingband 11 radial zwischen der Riemenscheibe 2 und der Schraubendrehfeder 12 angeordnet ist und folglich die Schraubendrehfeder 12 umschließt.

Sowohl das rechts gewickelte Schlingband 11 als auch die links gewickelte Schraubendrehfeder 12 sind vollständig zylindrisch und haben beidseitig schenkellose Enden, die das Schlingband 11 bzw. die Schraubendrehfeder 12 bei der Übertragung des Antriebsmoments radial aufweiten. Dabei verspannt sich das im Antriebsmomentfluss seitens der Riemenscheibe 2 verlaufende erste Schlingbandende 14 gegen den zylindrischen Innenmantel 15 einer ersten Hülse 16, die in der Riemenscheibe 2 mittels eines Pressverbands drehbefestigt ist. Das im Antriebsmomentfluss seitens der Schraubendrehfeder 12 verlaufende zweite Schlingbandende 17 verspannt sich gegen den zylindrischen Innenmantel 18 einer zweiten Hülse 19, die in der ersten Hülse 16 drehbar gelagert ist und deren Innenmantel 18 den gleichen Durchmesser wie der Innenmantel 15 hat.

Das von der Riemenscheibe 2 eingeleitete Antriebsmoment wird ausschließlich durch Haftreibung zwischen der ersten Hülse 16 und dem ersten Schlingbandende 14 einerseits und zwischen dem zweiten Schlingbandende 17 und der zweiten Hülse 19 andererseits in die Schraubendrehfeder 12 eingeleitet und von dort aus auf die Nabe 4 übertragen. Die Riemenscheibe 2 ist daher ein kostengünstig hergestelltes Drehteil, das zwecks Verschleißschutz eine Wärmebehandlung oder Beschichtung nicht erfordert, sondern lediglich mit einem Korrosionsschutz versehen ist. Die auf die zweite Hülse 19 wirkenden Axialkräfte der Schraubendrehfeder 12 werden über einen Gleitlagerring 20 am Innenring des Kugellagers 7 abgestützt.

Das Schlingband 11 ermöglicht bei Drehmomentumkehr ein Überholen der Generatorwelle und der darauf befestigten Nabe 4 gegenüber der Riemenscheibe 2. In diesem Zustand zieht sich das Schlingband 11 auf seinen (unbelasteten) Ausgangsdurchmesser zusammen und rutscht in einer oder beiden Hülsen 16, 19 durch, wobei sich das dabei übertragbare Drehmoment auf das Gleitreibmoment zwischen den beiden durchrutschenden Kontaktpartnern reduziert.

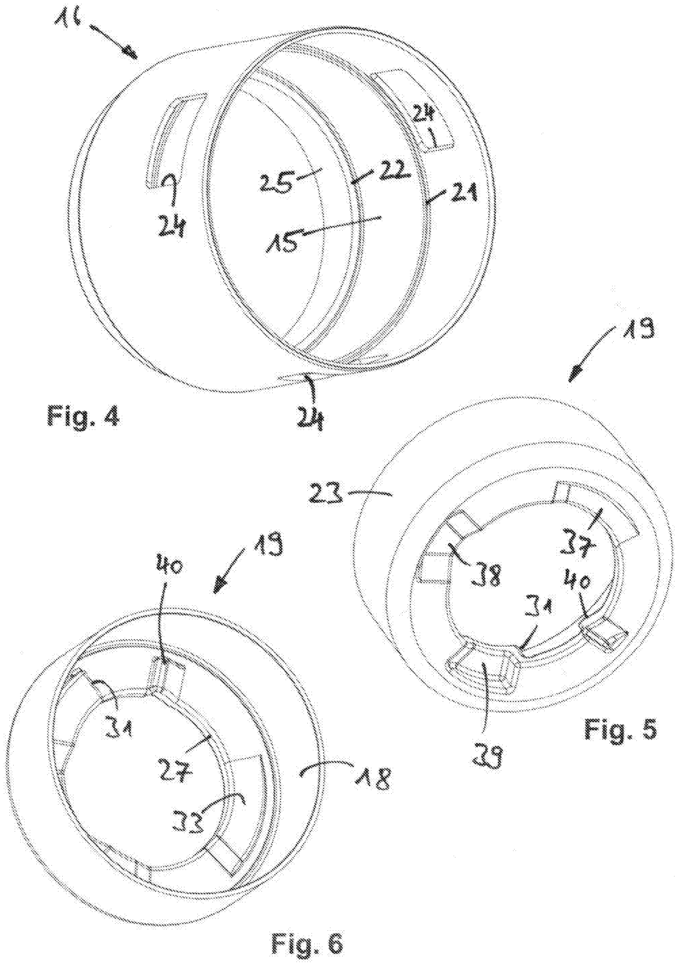

Die gegenseitige Drehlagerung und konstruktive Ausgestaltung der beiden Hülsen 16 und 19 wird nachfolgend in Zusammenschau mit den Figuren 4 bis 6 erläutert, die die Hülsen 16, 19 als Einzelteile zeigen. Beide Hülsen 16, 19 sind einteilig umgeformte und zwecks Verschleißfestigkeit ihrer Oberfläche gehärtete und/oder beschichtete Blechteile. Die erste Hülse 16 ist zweifach im Durchmesser gestuft, wobei die generatorseitige erste Durchmesserstufe 21 stirnseitig als Axialanschlag für die zweite Hülse 19 dient und wobei die generatorferne zweite Durchmesserstufe 22 stirnseitig als Axialanschlag für das Schlingband 11 dient. Die erste Durchmesserstufe 21 ist bei gleichmäßigem Außendurchmesser durch eine Vergrößerung des Innendurchmessers im Bereich des Drehlagerabschnitts gebildet, in dem die zweite Hülse 19 an ihrem Außenmantel 23 mit einer Spielpassung aufgenommen ist. Der Drehlagerabschnitt ist nahe der ersten Durchmesserstufe 21 von drei gleichmäßig umfangsverteilten Öffnungen 24 für ein Werkzeug durchsetzt, das eine ungehinderte Montage des Schlingbands 11 in die erste Hülse 16 ermöglicht. Dabei greift das Werkzeug durch die Öffnungen 24 und komprimiert das Schlingband 11 im Durchmesser, um es zentriert und ohne Anzustoßen über die erste Durchmesserstufe 21 hinweg auf den Innenmantel 15 und bis zur zweiten Durchmesserstufe 22 in die erste Hülse 16 einführen zu können.

Der sich von der zweiten Durchmesserstufe 22 in generatorferne Richtung erstreckende Endabschnitt 25 der ersten Hülse 16 umschließt die Schraubendrehfeder 12 mit geringer Radialluft, um in diesem Bereich ein unzulässiges Aufweiten der Schraubendrehfeder 12 unter Drehmomenteinwirkung zu verhindern.

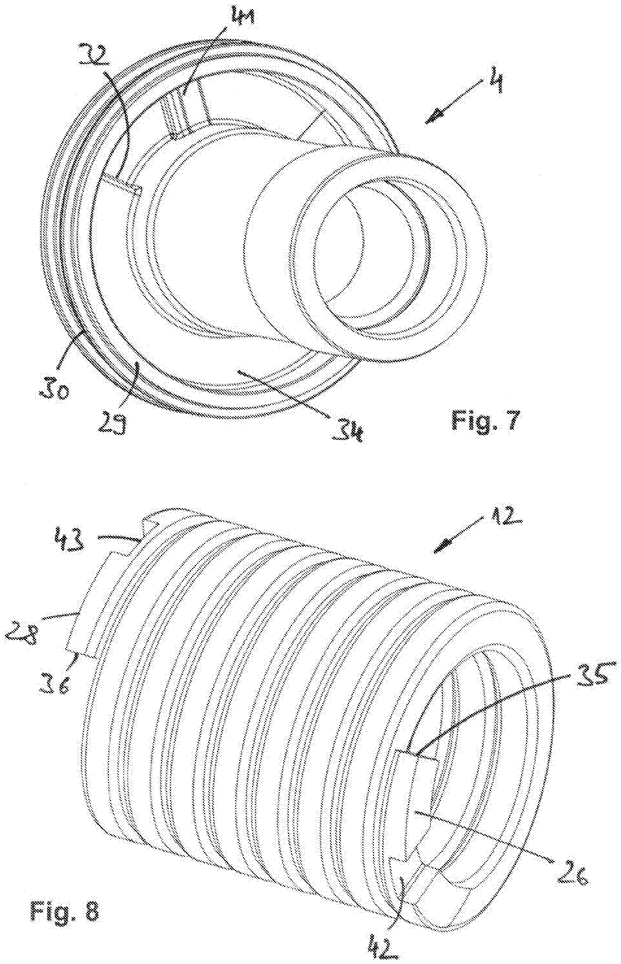

Wie es in weiterer Zusammenschau mit den Figuren 7 und 8 deutlich wird, liegt das antriebseitige Federende 26 der Schraubendrehfeder 12 an einem mit der zweiten Hülse 19 drehfesten Federteller 27 an, und das abtriebseitige Federende 28 liegt an einem mit der Nabe 4 drehfesten Federteller 29 an. Der mit der zweiten Hülse 19 drehfeste Federteller 27 ist vorliegend als mit der zweiten Hülse 19 einteiliges Blechumformteil ausgebildet. Der mit der Nabe 4 drehfeste Federteller 29 ist einteilig mit der Nabe 4 ausgebildet und hat am Außenmantel eine Umlaufnut 30, die den gemäß Figur 2 unmittelbar in der Riemenscheibe 2 verlaufenden Radiallagerring 8 axial einfasst. Die Federteller 27, 29 haben der stirnseitigen Kontur der Schraubendrehfeder 12 entsprechend axial rampenförmig ansteigende und an umfänglichen Stufen 31 und 32 zurückspringende Federanlageflächen 33 und 34. Das von der Riemenscheibe 2 auf die Nabe 4 übertragene Antriebsmoment wird über den Druckkontakt zwischen umfänglichen Stirnseiten 35 und 36 der Federenden 26, 28 und den umfänglichen Stufen 31, 32 der Federteller 27, 29 übertragen. Die Federanlagefläche 33 des Federtellers 27 ist durch kreisbogenförmige und umfänglich voneinander beabstandete Einformungen 37 bis 39 im Blechumformteil gebildet.

Im antriebsmomentfreien Betriebszustand des Entkopplers 1, in dem die Nabe 4 die Riemenscheibe 2 überholt, führt die Gleitreibung des dann durchrutschenden Schlingbands 11 dazu, dass ein oder beide Federenden 26, 28 der Schraubendrehfeder 12 mit einem Reibmoment beaufschlagt werden, das die Federenden 26, 28 in die Umfangsrichtung der axial ansteigenden Federanlageflächen 33, 34 beaufschlagt. Dieser unerwünschte Rampenhochlauf der Schraubendrehfeder 12 wird durch einen sogenannten Anti-ramp-up Mechanismus verhindert. Dabei bilden die Federenden 26, 28 mit den Federtellern 27, 29 gegenseitige Drehanschläge, die jeweils eine den umfänglichen Abstand zwischen den umfänglichen Stirnseiten 35, 36 der Federenden 26, 28 und den umfänglichen Stufen 31, 32 der Federteller 27, 29 vergrößernde Relativverdrehung der Federenden 26, 28 gegenüber den Federtellern 27, 29 begrenzen. Mit anderen Worten ermöglichen die Drehanschläge die Übertragung von Zugkräften an den Federenden 26, 28, so dass sich auch im Überholbetrieb des Entkopplers 1 trotz des dann wirkenden Gleitreibmoments die relative Umfangsposition der Federenden 26, 28 gegenüber den Federtellern 27, 29, wie sie im Antriebsmoment übertragenden Druckkontakt vorliegt, nicht wesentlich verändert.

Die Drehanschläge umfassen erfindungsgemäß Dreh-Rast-Konturen, die seitens der Federteller 27, 29 durch umfänglich in Richtung der Stufen 31, 32 keilförmig ansteigende Vorsprünge 40, 41 und seitens der Federenden 26, 28 durch axiale und vorliegend rechteckige Aussparungen 42, 43 gebildet sind. Die Keilform der Vorsprünge 40, 41 ermöglicht bei der Montage des Entkopplers 1 ein umfänglich zunächst ungerichtetes Anlegen der Federenden 26, 28 an die Federteller 27, 29 und anschließend deren widerstandsarme Relativverdrehung, die bis zum Verrasten der Vorsprünge 40, 41 in den Aussparungen 42, 43 den umfänglichen Abstand zwischen den Stirnseiten 35, 36 der Federenden 26, 28 und den umfänglichen Stufen 31, 32 der Federteller 27, 29 verkleinert. Der Vorsprung 40 des Federtellers 27 ist wie die Einformungen 37 bis 39 im Blechumformteil angeformt.

Grundsätzlich können die Dreh-Rast-Konturen alternativ auch kinematisch umgekehrt angeordnet sein, wobei dann einerseits die Vorsprünge Teil der Federenden sind und von den umfänglichen Stufen 31, 32 der Federteller weg keilförmig ansteigen und andererseits die Federteller entsprechend ausgespart sind.

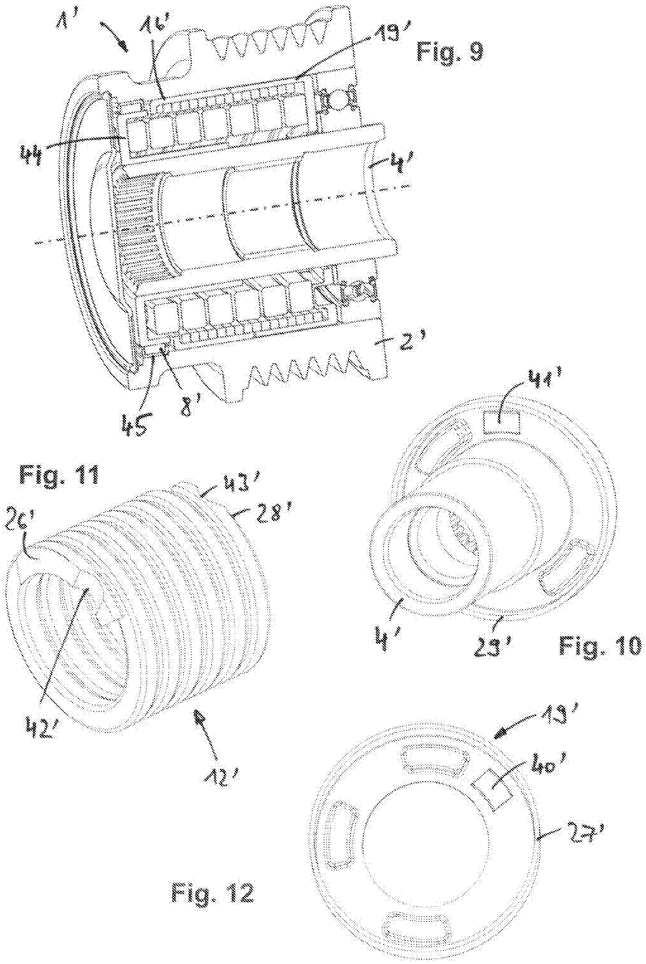

Die Figuren 9 bis 12 zeigen einen Entkoppler 1' mit nicht erfindungsgemäßer Drehlagerung der ersten Hülse 16' und der zweiten Hülse 19', die in diesem Fall neben der ersten Hülse 16' und unmittelbar in der Riemenscheibe 2' drehbar gelagert ist. Die Figuren zeigen dennoch konstruktive Details, die bei dem erfindungsgemäßen Entkoppler 1 gemäß den Figuren 1 bis 8 alternativ einsetzbar sind.

Die Nabe 4' ist mit einem Grundkörper und einer darauf aufgepressten Blechhülse 44 zur Bildung des mit der Nabe 4' drehfesten Federtellers 29' zweiteilig. Dies ermöglicht es, die Nabe 4' als Drehteil mit gleichmäßigem Außendurchmesser kostengünstig herzustellen. Gegenüber der Umlaufnut 30 am Außenmantel der einteiligen Nabe 4 erfolgt bei dieser Ausführung die axiale Einfassung des Radiallagerrings 8' nicht seitens der Nabe 4', sondern mittels eines in der Riemenscheibe 2' eingepressten Halterings 45, der mit U-Profil als Blechumformteil ausgebildet ist.

Ein weiteres Detail betrifft die Kontur des Anti-ramp-up Mechanismus'. Die Dreh-Rast-Konturen sind bei dieser Ausführung nicht keilförmig, sondern mit kreissegmentförmigen Vorsprüngen 40', 41' auf den Federtellern 27', 29' und kreissegmentförmigen Aussparungen 42', 43' in den Federenden 26', 28' der Schraubendrehfeder 12' umfänglich symmetrisch.

### Bezugszeichenliste

- 1: Riemenscheibenentkoppler / Entkoppler
- 2: Riemenscheibe
- 3: Außenmantel der Riemenscheibe
- 4: Nabe
- 5: Mittelabschnitt der Nabe
- 6: Innenvielzahn
- 7: Wälzlager / Kugellager
- 8: Gleitlager / Radiallagerring
- 9: Erweiterung
- 10: Schutzkappe
- 11: Einwegkupplung / Schlingband
- 12: Entkopplerfeder / Schraubendrehfeder
- 13: Drehachse
- 14: erstes Schlingbandende
- 15: Innenmantel der ersten Hülse
- 16: erste Hülse
- 17: zweites Schlingbandende
- 18: Innenmantel der zweiten Hülse
- 19: zweite Hülse
- 20: Gleitlagerring
- 21: erste Durchmesserstufe
- 22: zweite Durchmesserstufe
- 23: Außenmantel der zweiten Hülse
- 24: Öffnung
- 25: Endabschnitt der ersten Hülse
- 26: antriebseitiges Federende
- 27: Federteller
- 28: abtriebseitiges Federende
- 29: Federteller
- 30: Umlaufnut
- 31: Stufe
- 32: Stufe
- 33: Federanlagefläche
- 34: Federanlagefläche
- 35: Stirnseite des Federendes
- 36: Stirnseite des Federendes
- 37: Einformung
- 38: Einformung
- 39: Einformung
- 40: keilförmiger Vorsprung
- 41: keilförmiger Vorsprung
- 42: axiale Aussparung
- 43: axiale Aussparung
- 44: Blechhülse
- 45: Haltering

## Patentansprüche

1. Riemenscheibenentkoppler (1) zur Antriebsmomentübertragung vom Riemen eines Nebenaggregate-Riementriebs auf die Welle eines der Nebenaggregate, mit:
- einer Riemenscheibe (2),
- einer auf der Welle zu befestigenden Nabe (4, 4')
- und einer im Antriebsmomentfluss zwischen der Riemenscheibe (2) und der Nabe (4, 4') angeordneten Reihenschaltung aus einer Entkopplerfeder (12, 12') und einem Schlingband (11), das sich in Richtung der Drehachse (13) des Riemenscheibenentkopplers (1) erstreckt und radial zwischen der Riemenscheibe (2) und der Entkopplerfeder (12, 12') angeordnet ist und dessen beide Enden (14, 17) sich unter Übertragung des Antriebsmoments radial aufweiten,
wobei sich das im Antriebsmomentfluss seitens der Riemenscheibe (2) verlaufende erste Schlingbandende (14) gegen den Innenmantel (15) einer ersten Hülse (16) verspannt, die in der Riemenscheibe (2) drehbefestigt ist, **dadurch gekennzeichnet, dass** sich das im Antriebsmomentfluss seitens der Entkopplerfeder (12, 12') verlaufende zweite Schlingbandende (17) gegen den Innenmantel (18) einer zweiten Hülse (19) verspannt, die in der ersten Hülse (16) drehbar gelagert ist, wobei die erste Hülse (16) und die zweite Hülse (19) einteilig umgeformte und zwecks Verschleißfestigkeit gehärtete und/oder beschichtete Blechteile sind.

2. Riemenscheibenentkoppler (1) nach Anspruch 1, **dadurch gekennzeichnet, dass** die erste Hülse (16) mit einer ersten Durchmesserstufe (21) als Axialanschlag für die zweite Hülse (19) und mit einer zweiten Durchmesserstufe (22) als Axialanschlag für das Schlingband (11) versehen ist.

3. Riemenscheibenentkoppler (1) nach Anspruch 2, **dadurch gekennzeichnet, dass** die erste Hülse (16) in dem Drehlagerabschnitt für die zweite Hülse (19) umfangsverteilte Öffnungen (24) für die Montage des Schlingbands (11) in die erste Hülse (16) hat.

4. Riemenscheibenentkoppler (1) nach einem der vorhergehenden Ansprüche, **dadurch gekennzeichnet, dass** die Entkopplerfeder (12, 12') eine sich in Richtung der Drehachse (13) des Riemenscheibenentkopplers (1) erstreckende Schraubendrehfeder (12, 12') ist, deren antriebseitiges Federende (26, 26') an einem mit der zweiten Hülse (19) drehfesten Federteller (27, 27') anliegt und deren abtriebseitiges Federende (28, 28') an einem mit der Nabe (4, 4') drehfesten Federteller (29, 29') anliegt und die das Antriebsmoment über den Druckkontakt zwischen umfänglichen Stirnseiten (35, 36) der Federenden (26, 26', 28, 28') und umfänglichen Stufen (31, 32) der Federteller (27, 27', 29, 29') überträgt, wobei die Federenden (26, 26', 28, 28') mit den Federtellern (27, 27', 29, 29') gegenseitige Drehanschläge bilden, die jeweils eine den umfänglichen Abstand zwischen den umfänglichen Stirnseiten (35, 36) der Federenden (26, 26', 28, 28') und den umfänglichen Stufen (31, 32) der Federteller (27, 27', 29, 29') vergrößernde Relativverdrehung der Federenden (26, 26', 28, 28') gegenüber den Federtellern (27, 27', 29, 29') begrenzen.

5. Riemenscheibenentkoppler (1) nach Anspruch 4, **dadurch gekennzeichnet, dass** die Drehanschläge Dreh-Rast-Konturen umfassen, die bis zum Verrasten eine den umfänglichen Abstand zwischen den umfänglichen Stirnseiten (35, 36) der Federenden (26, 26', 28, 28') und den umfänglichen Stufen (31, 32) der Federteller (27, 27', 29, 29') verkleinernde Relativverdrehung der Federenden (26, 26', 28, 28') gegenüber den Federtellern (27, 27', 29, 29') ermöglichen.

6. Riemenscheibenentkoppler (1) nach Anspruch 5, **dadurch gekennzeichnet, dass** die Dreh-Rast-Konturen seitens der Federteller (27, 29) durch umfänglich keilförmig ansteigende Vorsprünge (40, 41) und seitens der Federenden (26, 28) durch axiale Aussparungen (42, 43) gebildet sind, in denen die Vorsprünge (40, 41) verrastet sind.

7. Riemenscheibenentkoppler (1) nach einem der Ansprüche 4 bis 6, **dadurch gekennzeichnet, dass** der mit der Nabe (4) drehfeste Federteller (29) einteilig mit der Nabe (4) ausgebildet ist und einen Außenmantel mit einer Umlaufnut (30) hat, wobei die Nabe (4) mittels eines in der Umlaufnut (30) angeordneten Gleitlagerrings (8) drehbar in der Riemenscheibe (2) gelagert ist.

8. Riemenscheibenentkoppler (1) nach einem der Ansprüche 4 bis 7, **dadurch gekennzeichnet, dass** der mit der zweiten Hülse (19) drehfeste Federteller (27) einteilig mit der zweiten Hülse (19) als Blechumformteil ausgebildet ist.

9. Riemenscheibenentkoppler (1) nach Anspruch 8, **dadurch gekennzeichnet, dass** das Blechumformteil eine axial rampenförmig ansteigende Federanlagefläche (33) hat, die durch kreisbogenförmige und umfänglich voneinander beabstandete Einformungen (38, 39, 40) im Blechumformteil gebildet ist.

## Claims

1. A belt pulley decoupler (1) for transmission of drive torque from the belt of an auxiliary unit belt drive to the shaft of one of the auxiliary units, comprising:
- a belt pulley (2),
- a hub (4, 4') to be secured to the shaft
- and a series connection which is arranged in the drive torque flow between the belt pulley (2) and the hub (4, 4') and consists of a decoupler spring (12, 12') and a wrap-around band (11) that extends in the direction of the rotational axis (13) of the belt pulley decoupler (1) and is arranged radially between the belt pulley (2) and the decoupler spring (12, 12') and both ends (14, 17) of which expand radially while transmitting the drive torque,
wherein the first end (14) of the wrap-around band, which extends in the drive torque flow on the belt-pulley (2) side, is braced against the inner surface (15) of a first sleeve (16) that is rotationally fixed in the belt pulley (2), **characterised in that** the second end (17) of the wrap-around band, which extends in the drive torque flow on the decoupler-spring (12, 12') side, is braced against the inner surface (18) of a second sleeve (19) which is rotatably mounted in the first sleeve (16), wherein the first sleeve (16) and the second sleeve (19) are sheet metal parts that are formed in one piece and hardened and/or coated for the purpose of wear-resistance.

2. The belt pulley decoupler (1) according to claim 1, **characterised in that** the first sleeve (16) is provided with a first diameter step (21) as an axial stop for the second sleeve (19) and with a second diameter step (22) as an axial stop for the wrap-around band (11).

3. The belt pulley decoupler (1) according to claim 2, **characterised in that** the first sleeve (16) has circumferentially distributed openings (24) in the pivot bearing portion for the second sleeve (19), for mounting the wrap-around band (11) in the first sleeve (16).

4. The belt pulley decoupler (1) according to one of the preceding claims, **characterised in that** the decoupling spring (12, 12') is a helical torsion spring (12, 12') which extends in the direction of the rotational axis (13) of the belt pulley decoupler (1) and the drive-side spring end (26, 26') of which rests on a spring plate (27, 27') which is rotationally fixed to the second sleeve (19), and the output-side spring end (28, 28') of which rests on a spring plate (29, 29') which is rotationally fixed to the hub (4, 4'), and which transmits the drive torque via the pressure contact between circumferential end faces (35, 36) of the spring ends (26, 26', 28, 28") and circumferential steps (31, 32) of the spring plates (27, 27', 29, 29'), wherein the spring ends (26, 26', 28, 28') form mutual rotary stops with the spring plates (27, 27', 29, 29'), each of said stops limiting a relative rotation of the spring ends (26, 26', 28, 28') relative to the spring plates (27, 27', 29, 29') that increases the circumferential distance between the circumferential end faces (35, 36) of the spring ends (26, 26', 28, 28') and the circumferential steps (31, 32) of the spring plates (27, 27', 29, 29').

5. The belt pulley decoupler (1) according to claim 4, **characterised in that** the rotary stops comprise rotary latching contours which, until latched, enable a relative rotation of the spring ends (26, 26', 28, 28') relative to the spring plates (27, 27', 29, 29') that reduces the circumferential distance between the circumferential end faces (35, 36) of the spring ends (26, 26', 28, 28') and the circumferential steps (31, 32) of the spring plates (27, 27', 29, 29').

6. The belt pulley decoupler (1) according to claim 5, **characterised in that** the rotary latching contours are formed on the spring-plate (27, 29) side by projections (40, 41) which rise circumferentially in a wedge shape, and on the spring-end (26, 28) side by axial recesses (42, 43) in which the projections (40, 41) are latched.

7. The belt pulley decoupler (1) according to one of claims 4 to 6, **characterised in that** the spring plate (29) which is rotationally fixed to the hub (4) is formed in one piece with the hub (4) and has an outer casing with a circumferential groove (30), wherein the hub (4) is rotatably mounted in the belt pulley (2) by means of a slide bearing ring (8) arranged in the circumferential groove (30).

8. The belt pulley decoupler (1) according to one of claims 4 to 7, **characterised in that** the spring plate (27) which is rotationally fixed to the second sleeve (19) is formed in one piece with the second sleeve (19) as a sheet-metal formed part.

9. The belt pulley decoupler (1) according to claim 8, **characterised in that** the sheet metal part has a spring contact surface (33) that rises axially in a ramp-like manner and is formed by circular arc-shaped and circumferentially spaced indents (38, 39, 40) in the sheet-metal formed part.

## Revendications

1. Dispositif d'isolation vibratoire à poulie à courroie (1) destiné à transférer le couple d'entraînement d'une courroie d'une transmission par courroie avec groupes auxiliaires à l'arbre de l'un des groupes auxiliaires, comprenant :
- une poulie à courroie (2),
- un moyeu (4, 4') à fixer sur l'arbre
- et un montage série, disposé dans le flux du couple d'entraînement entre la poulie à courroie (2) et le moyeu (4, 4'), ledit montage composé d'un ressort de découplage (12, 12') et d'une bande d'enroulement (11), laquelle s'étend dans le sens de l'axe de rotation (13) du dispositif d'isolation vibratoire à poulie à courroie (1) et est disposée radialement entre la poulie à courroie (2) et le ressort de découplage (12, 12') et dont les deux extrémités (14, 17) s'élargissent radialement sous l'effet du transfert du couple d'entraînement,
dans lequel la première extrémité de la bande d'enroulement (14) s'étendant dans le flux du couple d'entraînement du côté de la poulie à courroie (2) est serrée contre une enveloppe intérieure (15) d'un premier manchon (16), lequel est fixé en rotation dans la poulie à courroie (2), **caractérisée en ce que** la seconde extrémité de la bande d'enroulement (17) s'étendant dans le flux du couple d'entraînement du côté du ressort de découplage (12, 12') est serrée contre une enveloppe intérieure (18) d'un second manchon (19), lequel est monté de manière rotative dans le premier manchon (16), dans lequel le premier manchon (16) et le second manchon (19) sont des pièces en tôle formées d'une seule pièce et trempées et/ou revêtues pour résister à l'usure.

2. Dispositif d'isolation vibratoire à poulie à courroie (1) selon la revendication 1, **caractérisé en ce que** le premier manchon (16) comporte un premier pas de diamètre (21) en tant que butée axiale pour le second manchon (19) et un second pas de diamètre (22) en tant que butée axiale pour la bande d'enroulement (11).

3. Dispositif d'isolation vibratoire à poulie à courroie (1) selon la revendication 2, **caractérisé en ce que** le premier manchon (16) dans une section de palier pivotant pour le second manchon (19) comporte des ouvertures (24) réparties sur la circonférence pour le montage de la bande d'enroulement (11) dans le premier manchon (16).

4. Dispositif d'isolation vibratoire à poulie à courroie (1) selon l'une quelconque des revendications précédentes, **caractérisé en ce que** le ressort de découplage (12, 12') est un ressort de torsion hélicoïdal (12, 12') s'étendant dans le sens de l'axe de rotation (13) du dispositif d'isolation vibratoire à poulie à courroie (1), dont une extrémité de ressort (26, 26') côté entraînement repose sur une cuvette de ressort (27, 27') fixée en rotation au second manchon (19) et son extrémité de ressort (28, 28') côté sortie repose sur une cuvette de ressort (29, 29') fixée en rotation au moyeu (4, 4') et lequel transmet le couple d'entraînement au moyen du contact de pression entre des faces d'extrémité (35, 36) circonférentielles des extrémités de ressort (26, 26', 28, 28') et des pas (31, 32) circonférentiels des cuvettes de ressort (27, 27', 29, 29'), dans lequel les extrémités de ressort (26, 26', 28, 28') forment avec les cuvettes de ressort (27, 27', 29, 29') des butées de rotation réciproques, lesquelles limitent respectivement une rotation relative agrandissant une distance circonférentielle, entre les faces d'extrémité (35, 36) circonférentielles des extrémités de ressort (26, 26', 28, 28') et des pas (31, 32) circonférentiels des cuvettes de ressort (27, 27', 29, 29'), des extrémités de ressort (26, 26', 28, 28') par rapport aux cuvettes de ressort (27, 27', 29, 29').

5. Dispositif d'isolation vibratoire à poulie à courroie (1) selon la revendication 4, **caractérisé en ce que** les butées de rotation comprennent des contours d'encliquetage rotatif, lesquelles, jusqu'à ce qu'ils soient encliquetés, permettent une rotation relative réduisant la distance circonférentielle, entre les faces d'extrémité (35, 36) circonférentielles des extrémités de ressort (26, 26', 28, 28') et les pas (31, 32) circonférentiels des cuvettes de ressort (27, 27', 29, 29'), des extrémités de ressort (26, 26', 28, 28') par rapport aux cuvettes de ressort (27, 27', 29, 29').

6. Dispositif d'isolation vibratoire à poulie à courroie (1) selon la revendication 5, **caractérisé en ce que** les contours d'encliquetage en rotation sont formés du côté des cuvettes de ressort (27, 29) par des saillies (40, 41) montant en forme de coin et du côté des extrémités de ressort (26, 28) par des évidements (42, 43) axiaux, dans lesquels les saillies (40, 41) sont encliquetées.

7. Dispositif d'isolation vibratoire à poulie à courroie (1) selon l'une quelconque des revendications 4 à 6, **caractérisé en ce que** la cuvette de ressort (29) fixée en rotation au moyeu (4) est formée d'une seule pièce avec le moyeu (4) et comporte une enveloppe extérieure comportant une rainure circonférentielle (30), dans lequel le moyeu (4) est monté de manière rotative, au moyen d'une bague de palier lisse (8) disposée dans la rainure circonférentielle (30) dans la poulie (2).

8. Dispositif d'isolation vibratoire à poulie à courroie (1) selon l'une quelconque des revendications 4 à 7, **caractérisé en ce que** la cuvette de ressort (27) fixée en rotation au second manchon (19) est formée d'une seule pièce avec le second manchon (19) en tant que pièce mise en forme en tôle.

9. Dispositif d'isolation vibratoire à poulie à courroie (1) selon la revendication 8, **caractérisé en ce que** la pièce mise en forme en tôle comporte une surface de contact de ressort (33) inclinée axialement en forme de rampe, laquelle est formée à l'aide des évidements (38, 39, 40) en forme d'arc circulaire et espacés les uns des autres sur la circonférence de la pièce mise en forme en tôle.
